# EUROPÄISCHE PATENTSCHRIFT

(11) **EP 1 449 897 B1**
(45) Veröffentlichungstag und Bekanntmachung des Hinweises auf die Patenterteilung: **17.01.2007**
(21) Anmeldenummer: 03027902.0
(22) Anmeldetag: 04.12.2003
(51) Int. Cl.: C09J 5/00

(54) **Gegenstand, der zur Verklebung vorgesehen ist**
Object for adhesive bonding
Objet pour le collage

(30) Priorität: 22.02.2003 DE 10307602
(43) Veröffentlichungstag der Anmeldung: 25.08.2004
(73) Patentinhaber: LENTJES, Carsten, D-44267 Dortmund (DE)
(72) Erfinder: Kurosch, Heinz, 42549 Velbert (DE)
(74) Vertreter: Berkenbrink, Kai-Oliver

(56) Entgegenhaltungen:
- CH-A- 518 351
- FR-A- 2 705 946
- US-A- 3 379 562
- US-A- 5 569 515
- US-A- 5 948 493

## Beschreibung

Die Erfindung betrifft einen Deckel, der zur Verklebung mit einem Behälter vorgesehen ist.

Bei einem Gegenstand, der zur Verklebung vorgesehen ist, wird auf die Abschnitte der Oberfläche des Gegenstandes, die zur Haftung an einem anderen Gegenstand vorgesehen sind, ein Klebstoff aufgetragen. Diese, mit einem Klebstoff versehenen Abschnitte des Gegenstandes werden gegen den Gegenstand, der mit dem zur Verklebung vorgesehenen Gegenstand verklebt werden soll, gedrückt. Nach Verfestigung des Klebstoffes sind die beiden Gegenstände miteinander verbunden.

Soweit der zur Verklebung vorgesehene Gegenstand unmittelbar nach dem Auftragen des Klebstoffs mit einem anderen Gegenstand verklebt werden soll, treten insoweit keine Probleme auf. Probleme können jedoch dann auftreten, wenn der zur Verklebung vorgesehene Gegenstand nicht unmittelbar nach dem Auftragen des Klebstoffs auf diesen mit einem anderen Gegenstand verklebt werden soll. In diesem Fall kann es beispielsweise zu einer Verschmutzung oder einer Beschädigung des aufgetragenen Klebstoffes kommen, der seine Klebefähigkeit nachteilig beeinflußt. Auch kann es im Klebstoff bereits zu unerwünschten Verhärtungen kommen, die seine Klebeeigenschaften ebenfalls nachteilig beeinflussen.

Die vorgenannten Nachteile können beispielsweise bei einem Deckel auftreten, der werksseitig mit einem Kleber versehen wird. Dieser mit Klebstoff versehene Deckel wird zusammen mit einem Behälter, auf den der Deckel (später) aufgeklebt werden soll, zu einem Benutzer des Deckel-Behälter-System geliefert. Entsprechende Deckel-Behälter-Systeme werden beispielsweise in medizinischen Einrichtungen oder Laboratorien benötigt. Dort wird der Behälter "nach und nach" mit Sondermüll gefüllt, wobei der Deckel zwischen den einzelnen Befüllungen immer wieder vom Behälter abgenommen und danach (lose) auf den Behälter aufgelegt wird. Erst nachdem der Behälter vollständig gefüllt ist, wird der Deckel fest gegen den Behälter gedrückt, so dass der Deckel mit dem Behälter verklebt. Bei dem "losen" Auflegen des Deckels auf den Behälter ist gewünscht, dass sich der Deckel danach immer wieder leicht vom Behälter lösen läßt, ohne bereits fest mit diesem zu verkleben. Auch wenn es möglich ist, Behälter und Deckel derart zu dimensionieren, dass die mit Klebstoff versehenen Bereiche des Deckels nur bei einem starken Andrücken des Deckels auf den Behälter in Kontakt mit dem Behälter treten, nicht jedoch bei einem leichten Auflegen des Deckels auf den Behälter, kann es dazu kommen, dass der Klebstoff auch bei einem leichten Auflegen des Deckels auf den Behälter bereits in Kontakt mit dem Behälter tritt und dabei beschädigt wird.

Weitere Fälle, bei dem ein mit einem Klebstoff versehener Gegenstand nicht unmittelbar verklebt werden soll, liegen beispielsweise dort vor, wo ein Gegenstand produktionstechnisch bedingt zunächst mit einem Klebstoff versehen und erst später mit einem anderen Gegenstand verklebt werden soll (beispielsweise bei einem längeren Transport dieses Gegenstandes durch eine Betriebsstätte oder bei einer Zwischenlagerung dieses Gegenstandes).

Es ist bekannt, zum Beispiel geöltes Papier auf einen Klebstoff, der auf einen Gegenstand aufgetragen ist, aufzulegen und vom Klebstoff abzuziehen, wenn der Gegenstand verklebt werden soll. Das Aufbringen und Entfernen dieses Papiers auf den Klebstoff ist jedoch sehr umständlich. Die Beschaffung und Entsorgung des geölten Papiers ist kostenintensiv. Weiterhin ist es nur möglich, dieses Papier auf "flache" Klebeflächen aufzubringen. Schließlich kann es bei der Verklebung des Gegenstandes vergessen werden, das Papier (zumindest von bestimmten Bereichen) des Klebstoffes abzuziehen, was in diesen Bereichen zu einer mangelnden Verklebung des Gegenstandes an dem Gegenstand, mit dem er verklebt werden soll, führt.

US 5,569,515 offenbart ein Etikett mit einer Klebeschicht, die durch eine Schutzfolie abgedeckt ist. Vor dem Verkleben des Etiketts wird die Schutzfolie entfernt.

Der Erfindung liegt die Aufgabe zugrunde, einen zur Verklebung mit einem Behälter vorgesehenen Deckel zur Verfügung zu stellen, der mittels eines Klebstoffes, der auf Abschnitte der Oberfläche des Deckels aufgetragen ist, zu einem beliebigen Zeitpunkt einfach und sicher mit dem Behälter verklebt werden kann.

Erfindungsgemäß gelöst wird die Aufgabe durch einen Deckel gemäß Anspruch 1.

Der Erfindung liegt die Erkenntnis zugrunde, dass ein Klebstoff durch einen darauf aufgetragenen, nach seiner Verfestigung nicht-klebenden Lack soweit vor äußeren Einflüssen geschützt werden kann, dass eine nachteilige Beeinflussung der Klebeeigenschaften des Klebstoffes durch den Lack weitgehend verhindert werden kann. Der Lack bildet auf dem Klebstoff somit gleichsam eine Schutzschicht", die den Klebstoff nach außen abdeckt.

Die Festigkeit des Lackes ist groß genug, den Klebstoff zum Beispiel vor einem leichten Druck zu schützen. Somit kann der Deckel mit seinem Klebstoff _{"}leicht" gegen den Behälter gedrückt werden, ohne dass der Klebstoff selbst mit dem Behälter in Kontakt tritt.

Wird der Druck auf den mit dem Lack überzogenen Klebstoff jedoch erhöht, überschreitet der Druck also einen bestimmten Schwellenwert, wird die Lackschicht zerstört, so dass der Klebstoff nach außen treten kann. Dabei kann der Klebstoff zwischen Rissen im Lack, die sich nach dem Überschreiten des Druck-Schwellenwertes im Lack bilden, durch die Lackschicht hindurch fließen; der Lack kann dann teilweise auch vom Klebstoff abplatzen oder in den Klebstoff hineingedrückt werden.

Bei dem anmeldungsgemäßen Gegenstand handelt es sich um einen Deckel, der am äußeren, umlaufenden Rand der Deckelinnenseite mit einen Klebstoff versehen ist.

Grundsätzlich kann ein beliebiger Klebstoff auf die Oberfläche des Deckels aufgetragen sein. Insbesondere kann beispielsweise jedoch ein Klebstoff vorgesehen sein, der bei Raumtemperatur (oder beispielsweise in einem Temperaturbereich zwischen 0°C und 200°C, zwischen 0°C und 40°C oder zwischen 10°C und 30°C) formstabil ist. "Formstabil" bedeutet, dass er bei den vorgenannten Temperaturen nicht zerfließt, sondern in einer bestimmten räumlichen Form beständig ist.

Der Klebstoff kann beispielsweise in Form einer Schnur oder einer Raupe auf getragen sein. Die Klebstoffform hat in diesem Fall mithin ein "wurstähnliches" Aussehen.

Es kann vorgesehen sein, dass der Klebstoff bei Raumtemperatur (oder beispielsweise in einem Temperaturbereich zwischen 0°C und 200°C, zwischen 0°C und 40°C oder zwischen 10°C und 30°C) ein elastisches, thixotropes oder plastisches Verhalten aufweist. Der Klebstoff kann beispielsweise ein sogenannter "Dauerklebstoft" sein, also ein Klebstoff, der nach seinem Auftrag auf eine Oberfläche seine klebenden Eigenschaften (zumindest für einen gewissen Zeitraum) behält, sich also nicht unmittelbar verfestigt beziehungsweise aushärtet.

Es können sowohl physikalisch abbindende als auch chemisch abbindende Klebstoffe verwendet werden.

Die physikalisch abbindenden Klebstoffe können lösungsmittelfrei oder -haltig sein. Es können zwei-, bevorzugt aber einkomponentige, physikalisch abbindende Klebstoffe verwendet werden, also zum Beispiel SchmelzKlebstoffe, Plastisol-Klebstoffe, Haft-Klebstoffe, Kontakt-Klebstoffe oder Lösungsmittel-/Dispersions-Klebstoffe.

Als physikalisch abbindende Dauerklebstoffe können beispielsweise Butyl-Klebstoffe oder Kautschuk-Klebstoffe verwendet werden.

Als chemisch abbindende Klebstoffe können insbesondere beispielsweise Klebstoffe auf Basis eines Harzes angewendet werden, beispielsweise Epoxydharz-Klebstoffe.

Indem der Klebstoff erfindungsgemäß mit einem Lack überzogen wird, ist es möglich, erfindungsgemäß auch Klebstoffe zu verwenden, die ihre klebenden Eigenschaften bei Kontakt mit Luft verhältnismäßig schnell verlieren. Dazu gehören beispielsweise Klebstoffe auf Basis von Silikon, Silan oder modifiziertem Silan, die durch die Reaktion mit in der Luft enthaltenem Wasser aushärten und dabei ihre klebenden Eigenschaften verlieren. Bei Verwendung entsprechender, sich schnell verfestigender Klebstoffe, war es bisher notwendig, den zur Verklebung vorgesehenen Gegenstand mit einem solchen Klebstoff zu versehen und unmittelbar anschließend daran an der Klebetläche mit dem Gegenstand zu kontaktieren, mit dem er verbunden werden sollte. Indem erfindungsgemäß nunmehr jedoch eine Lackschicht über dem Klebstoff appliziert ist, wird verhindert, dass der Klebstoff in Kontakt mit der Luft beziehungsweise der Luftfeuchtigkeit tritt und aushärtet. Die klebenden Eigenschaften dieses Klebstoffes können damit solange erhalten werden, bis der mit dem Lack überzogene Klebstoff fest gegen eine andere Fläche gedrückt wird.

Erfindungsgemäß kann auf dem Klebstoff grundsätzlich ein beliebiger Lack appliziert werden. Unter "Lack" wird anmeldungsgemäß ganz allgemein jede flüssige oder pulverförmig-feste Substanz verstanden, die (nach Applizierung auf einen Gegenstand; hier: den Klebstoff) durch chemische Reaktion und/oder eine physikalische Veränderung einen festen Film (auf dem Gegenstand, auf den er appliziert worden ist) bildet.

Der Lack kann auf einem Bindemittel, insbesondere einem organischen Bindemittel basieren. Der applizierbare Lack kann, je nach Art des Bindemittels, ein organisches Lösungsmittel und/oder Wasser enthalten oder auch frei davon sein (beispielsweise ein Pulver-Lack oder eine Pulverbeschichtung).

Weiterhin kann der Lack, neben dem Bindemittel, beispielsweise wenigstens eine der folgenden Komponenten beinhalten: Pigmente, Füllstoffe oder Lackhilfsmittel.

Bei dem applizierbaren Lack kann es sich auch um ein in einem Dispergiermittel dispergiertes Bindemittel handeln, das darüber hinaus ebenfalls beispielsweise wenigstens eine der vorgenannten, weiteren Komponenten enthalten kann.

Als Bindemittel kann beispielsweise ein vollsynthetisch aufgebauter Harz (Kunstharz) verwendet werden, wie beispielsweise ein Phenolharz, Arminharz, Alkydharz, Polyvinylacetat, Epoxydharz, Polyurethanharz, Polyesterharz, Chlorkautschuk, chloriertes Polypropylen, Cyklokautschuk, Ketonharz oder Acrylatharz.

Bevorzugt kann vorgesehen sein, einen Lack zu verwenden, der frei von organischen Bindemitteln ist.

Grundsätzlich sollte der Lack die folgenden Eigenschaften ausweisen: Es sollte nach Applikation und Verfestigung auf dem Klebstoff nicht- oder kaum-klebend sein; er sollte einen auf dem Klebstoff haftenden festen Film bilden; er sollte die Klebefähigkeit des Klebstoffes nicht negativ beeinflussen; er sollte eine bestimmte Mindestfestigkeit aufweisen, um den Klebstoff bis zu einem bestimmten Mindestdruck schützen zu können; er sollte frei von organischen Lösungsmitteln sein.

Es kann vorgesehen sein, dass der Lack Farbpigmente enthält, so dass dem Lack neben einer schützenden Funktion gleichzeitig auch eine dekorative Funktion verliehen werden kann.

Das Verfahren zur Erstellung des anmeldungsgemäßen Deckels kann beispielsweise mit den Schritten gemäß Anspruch 6 erfolgen.

Der Klebstoff kann auf beliebige Art und Weise auf den Deckel aufgetragen werden, beispielsweise mittels einer Spritzpistole oder einem Verklebe-Roboter.

Der Lack kann auf beliebige Art und Weise auf den Klebstoff appliziert werden, beispielsweise mit einem Pinsel, durch Aufspritzen mit Hilfe von Spritzgeräten, durch Tauchen oder durch Gießen.

Neben den vorgenannten Vorteilen weist der erfindungsgemäße Deckel beziehungsweise das Verfahren zu seiner Erstellung erhebliche weitere Vorteile auf:
- Die Lackschicht hält Schmutz, der die Klebefähigkeit des Stoffes negativ beeinflussen könnte, vom Klebstoff fern.
- Vor dem Verkleben des Deckels mit einem Behälter muss der Klebstoff nicht manipuliert werden (im Gegensatz beispielsweise zu einem durch ein Ölpapier abgedeckten Klebstoff, der zuvor vom Klebstoff abgezogen werden muß), so dass die Klebestreifen stets einfach und sicher miteinander verbunden werden können.
- Bei Temperaturen die (leicht) über dem Erweichungspunkt des Klebstoffes liegen, kann die Lackschicht den Klebstoff zusammenhalten und so dessen Zerfließen verhindern.
- Der Lack ist jeder räumlichen Form des Klebstoffs anpassbar.
- Ein Ausdampfen von geruchsbelästigenden oder toxischen Stoffen aus dem Klebstoff kann durch die Lackschicht verhindert werden.
- Der Lack ist, beispielsweise durch Spritzroboter, sehr einfach und rationell auf den Klebstoff applizierbar. Sämtliche der vorgenannten Merkmale des anmeldungsgemäßen Deckels beziehungsweise des Verfahrens zu seiner Erstellung können, einzeln oder in Kombination, beliebig miteinander kombiniert werden.

Weitere Merkmale der Erfindung ergeben sich aus den Ansprüchen sowie den sonstigen Anmeldungsunterlagen, insbesondere den Figuren.

In den nachfolgend stark schematisch wiedergegebenen Ausführungsbeispielen der Erfindung zeigt
FIG. 1
   den oberen Teil eines Behälter-Deckel-Systems in seitlicher Schnittansicht und
FIG. 2
   das Applizieren eines Lacks auf einen Klebstoff mittels eines Spritzgerätes.

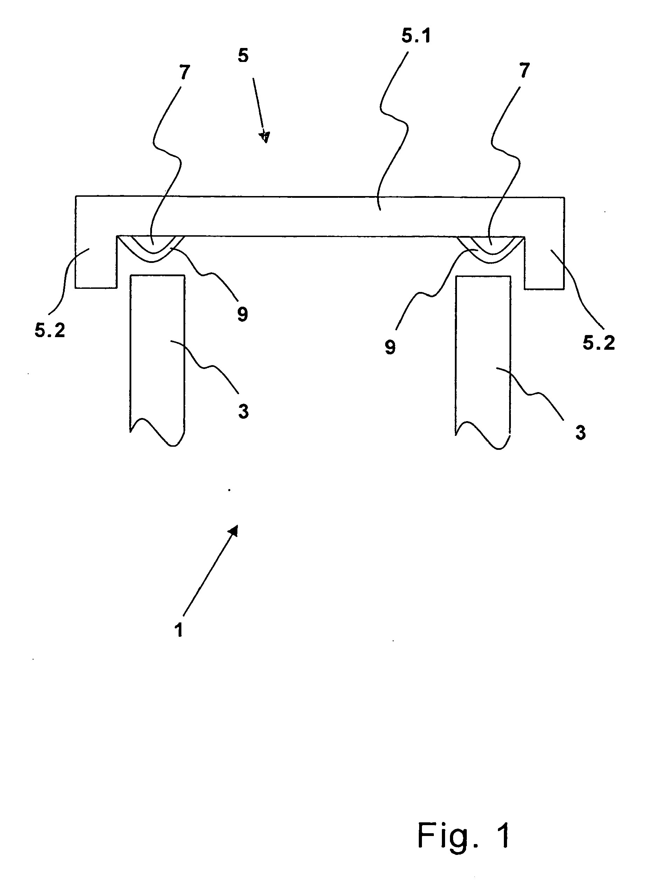

Das in FIG. 1 insgesamt mit dem Bezugzeichen 1 bezeichnete Behälter-Deckel-System, besteht aus einem Behälter 3 und einem dazu passenden Deckel 5.

In FIG. 1 ist nur das obere, offene Ende des Behälters 3 dargestellt, das von einer kreisförmigen Wandung begrenzt wird.

Passend zum oberen Ende des Behälters 3 ist der Deckel 5 ausgebildet, der aus einem scheibenförmigen Mittelteil 5.1 und einer dieses Mittelteil 5.1 randseitig umlaufenden, senkrecht vom Mittelteil 5.1 abstehenden Wandung 5.2 besteht. Die Wandung 5.2 ist so ausgebildet, dass sie die Wandung des Behälters 3 - beim Auflegen des Deckels 5 auf den Behälter 3 - außenseitig umfassen kann.

Auf die Abschnitte der Oberfläche des Mittelteils 5.1 des Deckels 5, die - beim Auflegen des Deckels 5 auf den Behälter 3 - in Kontakt mit dem oberen Rand der Wandung des Behälters 3 treten, ist ein Klebstoff 7 schnurförmig aufgetragen.

Auf die nicht in Kontakt mit der Oberfläche des Mittelteils 5.1 stehenden Obertlächenabschnitte des Klebstoffes 7 ist ein nicht-klebender Lack 9 appliziert.

Durch den Lack 9 ist der Klebstoff 7 gegen einen leichten Druck geschützt, so dass der Deckel 5 (hier nicht dargestellt) leicht (also mit geringem Druck) auf den Behälter 3 aufgelegt werden kann. In diesem Fall bleibt die Lackschicht 9 intakt, so dass der Klebstoff 7 nicht in Kontakt mit dem Behälter 3 oder der Luft tritt.

Wird der Druck auf den Deckel 5 erhöht, und die Mindestdruckfestigkeit des Lackes 9 überwunden, so wird dieser zerstört und der Klebstoff 7 kann in Kontakt mit dem oberen Rand der Wandung des Behälters 3 treten (nicht dargestellt). Nunmehr verkleben Deckel 5 und Behälter 3 miteinander.

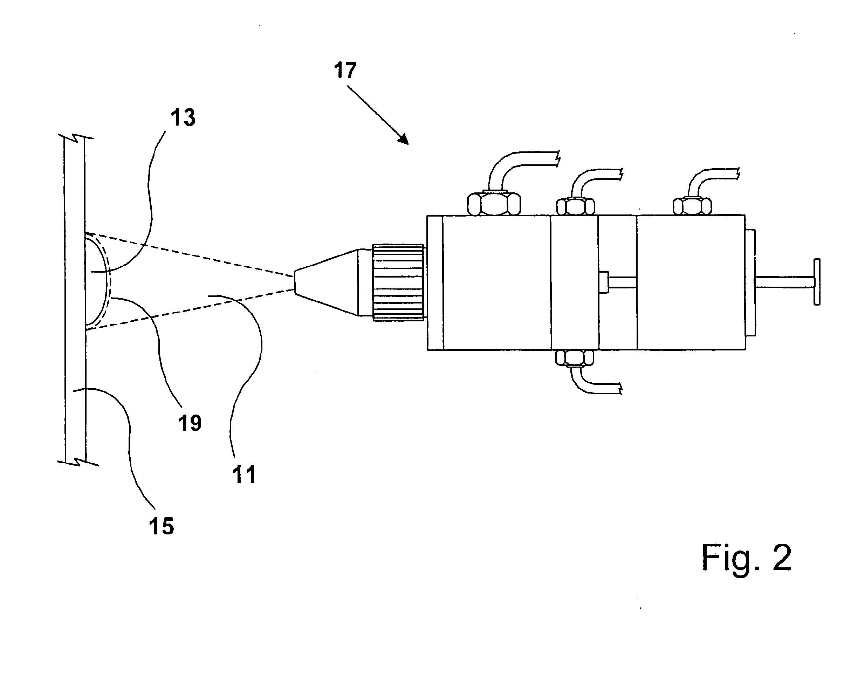

FIG. 2 zeigt die Applizierung eines Lacks 11 auf einen Klebstoff 13, der auf die Oberfläche eines Gegenstandes 15 aufgetragen ist. Der Lack 1 1 wird dazu mittels eines Spritzgerätes 17 auf den Klebstoff 13 aufgespritzt, so dass er auf dem Klebstoff 13 eine dünne Lackschicht 19 bildet.

## Patentansprüche

1. Deckel (5), der zur Verklebung mit einem Behälter vorgesehen ist, mit folgenden Merkmalen:
a) einem Klebstoff (7), der auf den äußeren, umlaufenden Rand der Innenseite des Deckels (5) auf diesen aufgetragen ist;
b) einem nicht-klebenden Lack (9), der
b1) auf die nicht in Kontakt mit der Oberfläche des Deckels (5) stehenden Oberflächenabschnitte des Klebstoffes (7) appliziert ist und
b2) im unzerstörten Zustand verhindert, dass der Klebstoff (7) in Kontakt mit der Luft tritt,
b3) wobei der Lack (9) ab einem bestimmten Schwellenwert durch Druck zerstörbar ist und dabei Klebstoff (7) zwischen Rissen im Lack (9) hindurchfließbar ist.

2. Deckel nach Anspruch 1, bei dem der Klebstoff (7) ein Dauerklebstoff ist.

3. Deckel nach Anspruch 1, bei dem der Klebstoff (7) bei Raumtemperatur formstabil ist.

4. Deckel nach Anspruch 1, bei dem der Klebstoff (7) in Form einer Schnur oder einer Raupe aufgetragen ist.

5. Deckel nach Anspruch 1, bei dem der Klebstoff (7) bei Raumtemperatur ein elastisches, thixotropes oder plastisches Verhalten aufweist.

6. Verfahren zur Herstellung des Deckels nach Anspruch 1 mit folgenden Schritten:
6.1 auf den äußeren, umlaufenden Rand der Innenseite des Deckels (5) wird auf diesen ein Klebstoff (7) aufgetragen;
6.2 auf die nicht in Kontakt mit der Oberfläche des Deckels (5) stehenden Oberflächenabschnitte des Klebstoffes (7) wird anschließend ein nach seiner Verfestigung nicht-klebender Lack (9) appliziert.

## Claims

1. A lid (5) designed for being glued to a container with the following characteristics:
a) an adhesive (7) that is applied to the lid (5) on the outer peripheral edge of its inner side;
b) a non-adhesive lacquer (9) that
b1) is applied to the surface sections of the adhesive (7) that are not in contact with the surface of the lid (5) and
b2) prevents the adhesive (7) from coming in contact with air in its intact state,
b3) wherein the lacquer (9) can be destroyed under the influence of pressure above a certain threshold value and the adhesive (7) is able to flow through the cracks in the lacquer (9).

2. The lid according to Claim 1, wherein the adhesive (7) consists of a permanent adhesive.

3. The lid according to Claim 1, wherein the adhesive (7) is dimensionally stable at room temperature.

4. The lid according to Claim 1, wherein the adhesive (7) is applied in the form of a track or a bead.

5. The lid according to Claim 1, wherein the adhesive (7) has elastic, thixotropic or plastic properties at room temperature.

6. A method for manufacturing the lid according to Claim 1 with the following characteristics:
6.1 an adhesive (7) is applied to the lid (5) on the outer peripheral edge of its inner side;
6.2 a lacquer (9) that is non-adhesive after drying is applied to the surface sections of the adhesive (7) that are not in contact with the surface of the lid (5).

## Revendications

1. Couvercle (5), prévu pour être collé sur un récipient, avec les attributs suivants :
a) un agent adhésif (7) qui sur le bord extérieur périphérique de la face intérieure du couvercle (5) est appliqué sur ce dernier ;
b) une laque non adhésive (9) qui
b1) est appliquée sur les sections superficielles de l'agent adhésif (7) qui ne sont pas en contact avec la surface du couvercle (5) et
b2) qui dans l'état non détruit évite que l'agent adhésif (7) n'entre en contact avec l'air,
b3) la laque (9) étant destructible par pression à partir d'une certaine valeur seuil et à cet effet, l'agent adhésif (7) pouvant s'écouler à travers des fissures dans la laque (9).

2. Couvercle selon la revendication 1, sur lequel l'agent adhésif (7) est un agent adhésif permanent.

3. Couvercle selon la revendication 1, sur lequel l'agent adhésif (7) est indéformable à température ambiante.

4. Couvercle selon la revendication 1, sur lequel l'agent adhésif (7) est appliqué sous forme d'un cordon ou d'une chenille.

5. Couvercle selon la revendication 1, sur lequel à température ambiante, l'agent adhésif (7) a un comportement élastique, thixotrope ou plastique.

6. Procédé de fabrication du couvercle selon la revendication 1, avec les étapes suivantes :
6.1 sur le bord extérieur périphérique de la face intérieure du couverle (5), on applique sur ce dernier un agent adhésif (7) ;
6.2 sur les sections superficielles de l'agent adhésif (7) qui ne sont pas en contact avec la surface du couvercle (5), on applique ensuite une laque (9) non adhésive après sa solidification.
